# EUROPÄISCHE PATENTANMELDUNG

(11) **EP 1 981 149 A2**
(43) Veröffentlichungstag der Anmeldung: **15.10.2008**
(21) Anmeldenummer: 08102876.3
(22) Anmeldetag: 25.03.2008
(51) Int. Cl.: H02K 1/27

(54) **Permanentmagnetmotor**

(30) Priorität: 10.04.2007 DE 102007000213
(71) Anmelder: HILTI Aktiengesellschaft, 9494 Schaan (LI)
(72) Erfinder: Riedl, Reinhard, 86923, Finning (DE); Pritzen, Thomas, 86199, Inningen (DE)
(74) Vertreter: Wildi, Roland

(57) **Zusammenfassung**

Ein Permanentmagnetmotor mit einem um eine Drehachse drehbaren Rotor (3) mit mehreren symmetrisch umlaufend versetzten, sich axial erstreckenden Permanentmagneten (6), die jeweils in Aufnahmen (16) eines aus axial gestapelten Blechlamellen (10) zusammengesetzten Blechpaketes (7) angeordnet sind, wobei die Blechlamellen (10) Ausnehmungen (8a, 8b) aufweisen, welche im Blechpaket (7) die Aufnahmen (16) ausbilden, und wobei die Blechlamellen (10) jeweils ein koaxiales Innenloch (9) aufweisen und zumindest um einen Phasenwinkel verdreht rotationssymmetrisch ausgebildet sind, wobei zumindest zwei Blechlamellen (10) zueinander um den halben Phasenwinkel versetzt orientiert sind, dadurch gekennzeichnet, dass die Blechlamellen (10) jeweils zumindest eine erste zum Innenloch (9) offene Ausnehmung (8a) und eine zweite zum Innenloch (9) geschlossene Ausnehmung (8b) aufweisen.

## Beschreibung

Die Erfindung bezeichnet einen Permanentmagnetmotor mit einem Rotor, insbesondere für den Antrieb einer Elektrohandwerkzeugmaschine.

Die Rotoren derartiger Permanentmagnetmotoren weisen mehrere umlaufend versetzte Permanentmagnete auf, die bei zweckentsprechender Verwendung im bürstenlosen Permanentmagnetmotor im drehenden Magnetfeld eines Stators angetrieben werden. Die Permanentmagnete werden in bekannter Weise durch Kleben, Kunststoffumspritzen oder mit mechanischen Mitteln auf ihrem vorzugsweise als Blechpaket ausgebildeten Grundkörper fixiert.

Um bei mit Toleranzen versehenen Permanentmagneten ein technologisch schwer beherrschbares Kunststoffumspritzen zu vermeiden, werden nach der DE10349442 die zuvor mit Backlackschichten versehenen Permanentmagnete durch Wiederaufschmelzen mit dem Blechpaket verklebt.

Nach der US5508576 sind die Permanentmagnete kraftformschlüssig im Blechpaket fixiert. An einen umspritzten Rotor stirnseitig angeformte Ventilatorflügel sind nach der DE4430073 bekannt.

Nach der US6047460 weist ein derartiger Rotor vier symmetrisch umlaufend versetzte, sich axial erstreckende Permanentmagnete auf, welche in Aufnahmen eines zusammengesetzten Blechpaketes aus axial gestapelten und (mit Ausnahme der axialen Endkappen) gleichartig orientierten Blechlamellen mit einem koaxialen Innenloch und jeweils vier geschlossenen Ausnehmungen eingesetzt sind. Weil nur die zwei diametral gegenüberliegende Ausnehmungen zueinander spiegelsymmetrisch sind, sind die Blechlamellen zwar zweizählig (um 180° verdreht), aber nicht vierzählig (um 90° verdreht) rotationssymmetrisch. Da bei umlaufend benachbarten Aufnahmen die Aufnahmeform als solche zwar identisch, aber radial gespiegelt orientiert ist, können zugeordnet einheitlich ausgeformte Permanentmagnete nur in umlaufend alternierenden magnetischen Ausrichtungen eingesetzt werden, was für den rotierenden Betrieb des Permanentmagnetmotors notwendig ist. Da die Permanentmagnete formschlüssig in das zuvor erwärmte Blechpaket eingeschrumpft werden, sind Masstoleranzen der Permanentmagnete praktisch nicht erlaubt.

Die Aufgabe der Erfindung besteht in der Realisierung eines Permanentmagnetmotors mit einem zum Kunststoffumspritzen ausgebildeten Rotor mit toleranzbehafteten Permanentmagneten.

Die Aufgabe wird im Wesentlichen durch die Merkmale des Anspruchs 1 gelöst. Vorteilhafte Weiterbildungen ergeben sich aus den Unteransprüchen.

So weist ein Permanentmagnetmotor einen um eine Drehachse drehbaren Rotor mit mehreren symmetrisch umlaufend versetzten, sich axial erstreckenden Permanentmagneten auf, die jeweils in Aufnahmen eines aus axial gestapelten Blechlamellen zusammengesetzten Blechpaketes angeordnet sind, wobei die Blechlamellen Ausnehmungen aufweisen, welche im Blechpaket die Aufnahmen ausbilden, und wobei die Blechlamellen jeweils ein koaxiales Innenloch aufweisen und zumindest um einen Phasenwinkel verdreht rotationssymmetrisch ausgebildet sind, wobei zumindest zwei Blechlamellen zueinander um den halben Phasenwinkel versetzt orientiert sind und wobei die Blechlamellen jeweils zumindest eine erste zum Innenloch offene Ausnehmung und eine zweite zum Innenloch geschlossene Ausnehmung aufweisen.

Durch die mit der Verdrehung der Blechlamellen bewirkte Überlappung sowohl einer offenen als auch einer geschlossenen Ausnehmung entstehen für die Permanentmagnete passende Aufnahmen, welche axial versetzt sowohl eine vollumfängliche Führung als auch eine zum Innenloch hin offene Randöffnung aufweisen, die beim Umspritzen einer sich durch das Innenloch koaxial erstreckenden Rotorachse mit Kunststoff zusätzlich dessen Eindringen in die Aufnahmen und somit eine zuverlässige Fixierung der toleranzbehafteten Permanentmagnete gestattet.

Vorteilhaft bildet die Blechlamelle am Innenloch einen Führungsabschnitt mit einer auf einem koaxialen Führungskreis verlaufenden oder diesen nur radial Aussen berührenden Führungskontur aus, durch welche eine sich durch das Innenloch koaxial erstreckende Rotorachse im Blechpaket formschlüssig geführt wird.

Vorteilhaft verläuft die Führungskontur zumindest abschnittweise kreisringförmig, wodurch im Blechpaket für die einzuführende Rotorachse eine glatte Zwangsführung ausgebildet ist, welche beim Einführen der Rotorachse in das Blechpaket vor dem Umspritzen sowohl allfällige Verformungen im Blechpaket als auch Kratzer an der Rotorachse vermindert.

Vorteilhaft sind in der Blechlamelle zwischen den Ausnehmungen jeweils umlaufend versetzte, zum Innenloch offene, Auskerbungen vorhanden, die sich über einen Auskerbungswinkel erstrecken, welcher betragsmässig grösser als der halbe Phasenwinkel ist, wodurch sich vermittelt durch die Überlappung der Auskerbungen im Blechpaket beim Umspritzen einer sich durch das Innenloch koaxial erstreckenden Rotorachse mit Kunststoff ein sich axial erstreckender Spritzkanal ausbildet, der das gleichmässige Eindringen des Kunststoffs in alle Ausnehmungen erleichtert.

Vorteilhaft sind im Blechpaket je zwei axial benachbarte Blechlamellen betragsmässig um den halben Phasenwinkel versetzt, wodurch die zum Innenloch offene Ausnehmung gleichmässig axial verteilt ist.

Vorteilhaft sind die Blechlamellen zwar ganzzählig, aber nicht doppelt ganzzählig rotationssymmetrisch, wodurch je zwei Ausnehmungen umfänglich alternierend versetzt offen und geschlossen sind. Dadurch ist es unbenommen, ob je zwei axial benachbarte Blechlamellen gleichsinnig oder wechselsinnig um den halben Phasenwinkel versetzt sind.

Vorteilhaft sind die Blechlamellen zwar zweizählig, aber nicht vierzählig rotationssymmetrisch, wodurch je zwei Ausnehmungen umfänglich alternierend versetzt offen und geschlossen sind. Dadurch ist es unbenommen, ob je zwei axial benachbarte Blechlamellen gleichsinnig oder wechselsinnig um den halben Phasenwinkel von 90° drehversetzt gestapelt sind.

Vorteilhaft sind im Blechpaket je zwei axial benachbarte Blechlamellen um den halben Phasenwinkel gleichsinnig umlaufend versetzt, wodurch die zum Innenloch offenen Ausnehmungen umfänglich je einen offenen Helixkanal ausbilden, in welchen sich günstig Kunststoff einspritzen lässt.

Vorteilhaft weist die Blechlamelle je genau zwei offene und zwei geschlossene Ausnehmungen auf, wodurch je genau vier Helixkanäle zu jeder axial zweiten Ausnehmung offen sind.

Vorteilhaft weist die Blechlamelle vollumfänglich um den halben Phasenwinkel drehversetzt angeordnete Stanzpakettierpunkte auf, die bezüglich einer Lamellenseite axial auskragen und bezüglich der anderen Lamellenseite stapelbar passend axial eingedrückt sind, wodurch eine formschlüssige Platzierung der exakt um den halben Phasenwinkel zum Blechpaket gestapelten Blechlamellen erzielt wird.

Vorteilhaft wird im zugeordneten Herstellungsverfahren in einem ersten Schritt aus zueinander drehversetzt gestapelten Blechlamellen ein Blechpaket mit radial drehversetzten, sich axial erstreckenden Aufnahmen für Permanentmagnete und einem koaxialen Innenloch für eine Rotorachse erstellt, in einem zweiten Schritt die Permanentmagnete in die Aufnahmen und die Rotorachse in das Innenloch eingeführt, in einem dritten Schritt dieser zusammengesetzte Rotor in eine Spritzgussform eingesetzt und in einem vierten Schritt die Rotorachse mit Kunststoff umspritzt, wobei dieser über zum Innenloch offene Ausnehmungen der Blechlamellen in die Aufnahmen eindringt und die Permanentmagnete in den Aufnahmen stoffschlüssig fixiert.

Vorteilhaft dringt im vierten Schritt der Kunststoff über zum Innenloch offene Auskerbungen in die offenen Ausnehmungen der Blechlamellen ein, wodurch die stoffschlüssige Fixierung der Permanentmagnete axial gleichmässig ist.

Vorteilhaft werden im vierten Schritt vermittelt durch Flügelauskerbungen der Spritzgussform am Rotor stirnseitig axial auskragende, umlaufend verteilte Ventilatorflügel aus Kunststoff ausgeformt, wodurch eine separate Herstellung und Montage eines Rotorlüfters entfallen kann.

Dieser Rotor wird zusammen mit einem zugeordneten Stator zur Herstellung eines bürstenlosen Permanentmagnetmotors verwendet, insbesondere für eine Elektrohandwerkzeugmaschine.

Die Erfindung wird bezüglich eines vorteilhaften Ausführungsbeispiels näher erläutert mit:
Fig. 1 als bürstenlosen Permanentmagnetmotor 1 in Aufsicht
Fig. 2 als Seitenansicht
Fig. 3 als Rotor im Querschnitt nach Ebene III - III in Fig. 2
Fig. 4 als Rotor im Längsschnitt nach Ebene IV - IV in Fig. 2
Fig. 5 als Blechpaket im Längsschnitt
Fig. 6 als Blechlamelle in Aufsicht
Fig. 7 als Detail des Blechpaketes in Perspektive

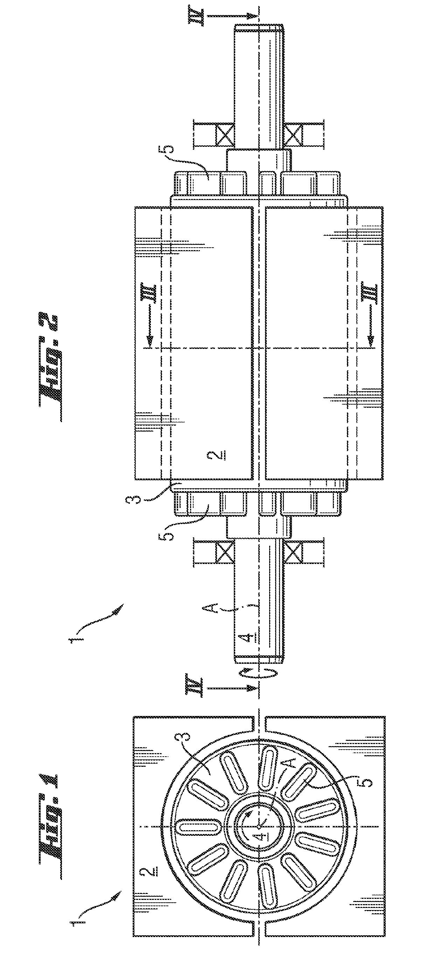

Nach Fig. 1 und Fig. 2 ist in einem bürstenlosen Permanentmagnetmotor 1 einer nicht dargestellten Elektrohandwerkzeugmaschine ein Stator 2 und ein um eine Drehachse A drehbar gelagerter Rotor 3 mit einer Rotorachse 4 vorhanden, wobei am Rotor 3 beidseitig stirnseitig axial auskragende, umlaufend verteilte Ventilatorflügel 5 ausgeformt sind.

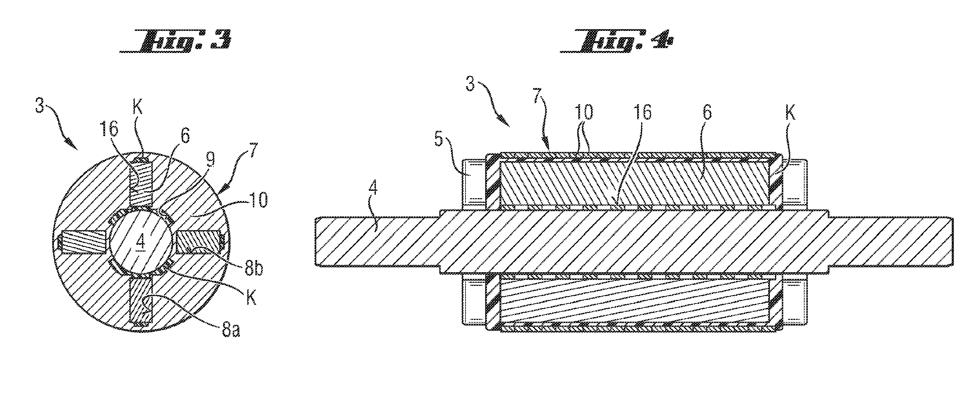

Nach Fig. 3 und Fig. 4 sind die Ventilatorflügel 5 aus einem Kunststoff K ausgeformt, welcher die Rotorachse 4 und zumindest teilweise die vier sich axial erstreckenden, toleranzbehafteten Permanentmagnete 6 umfasst und diese somit in den vier sich axial erstreckenden Aufnahmen 16 eines aus axial gestapelten Blechlamellen 10 zusammengesetzten Blechpaketes 7 des Rotors 3 dauerhaft fixiert. Die Blechlamellen 10 weisen je zwei symmetrisch umlaufend versetzte offene Ausnehmungen 8a und geschlossene Ausnehmungen 8b zu einem koaxialen Innenloch 9 auf, welches die Rotorachse 4 radial umfasst.

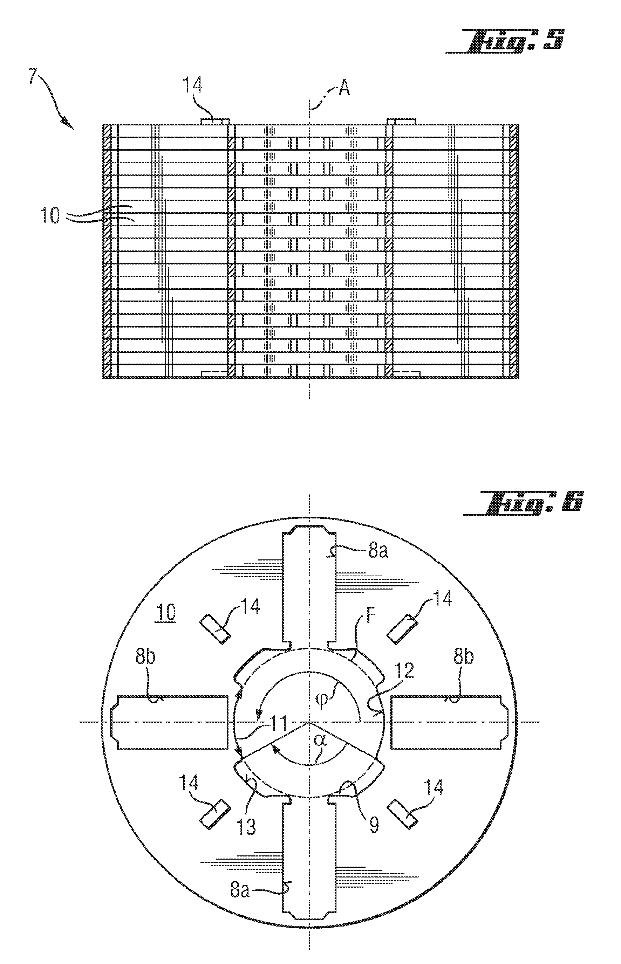

Nach Fig. 5 besteht das Blechpaket 7 aus axial gestapelt zusammengesetzten Blechlamellen 10, die über formschlüssig passend ineinander greifende Stanzpakettierpunkte 14, welche bezüglich einer Lamellenseite axial auskragen und bezüglich der anderen Lamellenseite passend axial eingedrückt sind, axial alternierend zueinander drehversetzt orientiert angeordnet sind.

Nach Fig. 6 sind die Blechlamellen 10 um einen Phasenwinkel [phi] von 180° verdreht rotationssymmetrisch ausgebildet, aber nicht um 90°. Somit sind die Blechlamellen 10 zweizählig, aber nicht vierzählig rotationssymmetrisch. Die Blechlamellen 10 weisen am koaxialen Innenloch 9 eine Führungskontur 12 auf, die einen Führungsabschnitt 11 ausbildet, bei welchem die Führungskontur 12 kreisringförmig auf einem koaxialen Führungskreis F verläuft. Die Blechlamelle 10 weist genau zwei offene Ausnehmungen 8a und zwei geschlossene Ausnehmungen 8b auf. Dazwischen sind jeweils umlaufend versetzte, zum Innenloch 9 offene Auskerbungen 13 vorhanden, welche sich jeweils über einen Auskerbungswinkel [alpha] erstrecken, der mit 120° betragsmässig grösser als der halbe Phasenwinkel [phi] von 90° ist. Zudem weist die Blechlamelle 10 vier exakt um den halben Phasenwinkel [phi] drehversetzt angeordnete Stanzpakettierpunkte 14 auf.

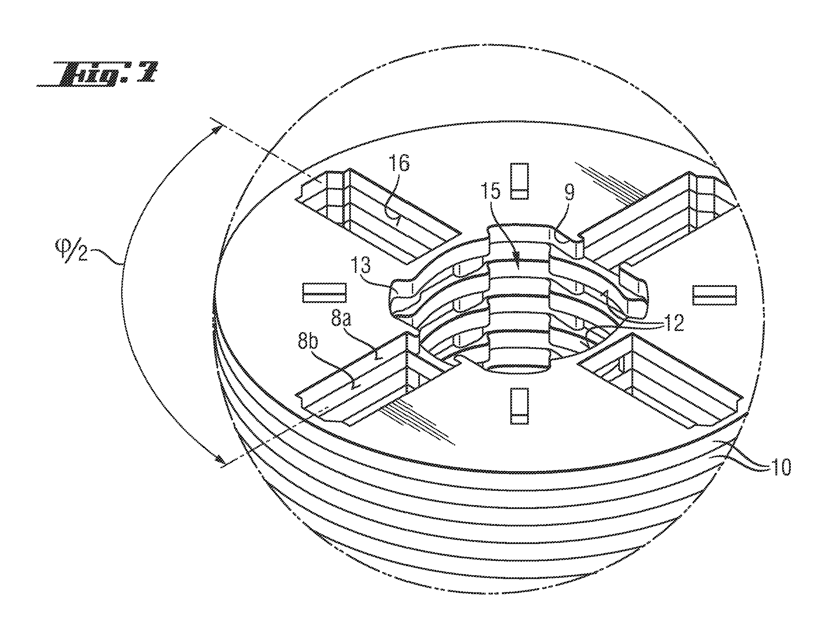

Nach Fig. 7 sind je zwei axial benachbarte Blechlamellen 10 zueinander um den halben Phasenwinkel [phi] von 90° drehversetzt orientiert, wobei je zwei diametral gegenüberliegende, zum Innenloch 9 offene Ausnehmungen 8a und geschlossene Ausnehmungen 8b axial alternierend überlappend gestapelt sind und die Aufnahmen 16 für die Permanentmagnete 6 (Fig. 3) ausbilden. Zudem sind die vier Führungskonturen 12 für die Rotorachse 4 (Fig. 3) umlaufend verteilt. Zwischen den Führungskonturen 12 bilden die Auskerbungen 13 einen axial verlaufenden Spritzkanal 15 aus, zu dem die offenen Ausnehmungen 8a geöffnet sind.

## Patentansprüche

1. Permanentmagnetmotor mit einem um eine Drehachse (A) drehbaren Rotor (3) mit mehreren symmetrisch umlaufend versetzten, sich axial erstreckenden Permanentmagneten (6), die jeweils in Aufnahmen (16) eines aus axial gestapelten Blechlamellen (10) zusammengesetzten Blechpaketes (7) angeordnet sind, wobei die Blechlamellen (10) Ausnehmungen (8a, 8b) aufweisen, welche im Blechpaket (7) die Aufnahmen (16) ausbilden, und wobei die Blechlamellen (10) jeweils ein koaxiales Innenloch (9) aufweisen und zumindest um einen Phasenwinkel ([phi]) verdreht rotationssymmetrisch ausgebildet sind, wobei zumindest zwei Blechlamellen (10) zueinander um den halben Phasenwinkel ([phi]) versetzt orientiert sind, **dadurch gekennzeichnet, dass** die Blechlamellen (10) jeweils zumindest eine erste zum Innenloch (9) offene Ausnehmung (8a) und eine zweite zum Innenloch (9) geschlossene Ausnehmung (8b) aufweisen.

2. Permanentmagnetmotor nach Anspruch 1, **dadurch gekennzeichnet, dass** die Blechlamelle (10) am Innenloch (9) einen Führungsabschnitt (11) mit einer auf einem koaxialen Führungskreis (F) verlaufenden oder diesen nur radial Aussen berührenden Führungskontur (12) ausbildet.

3. Permanentmagnetmotor nach Anspruch 2, **dadurch gekennzeichnet, dass** die Führungskontur (12) zumindest abschnittweise kreisringförmig verläuft.

4. Permanentmagnetmotor nach einem der Ansprüche 1 bis 3, **dadurch gekennzeichnet, dass** in der Blechlamelle (10) zwischen den Ausnehmungen (8a, 8b) jeweils umlaufend versetzte, zum Innenloch (9) offene Auskerbungen (13) vorhanden sind, die sich über einen Auskerbungswinkel ([alpha]) erstrecken, welcher betragsmässig grösser als der halbe Phasenwinkel ([phi]) ist.

5. Permanentmagnetmotor nach einem der Ansprüche 1 bis 4, **dadurch gekennzeichnet, dass** im Blechpaket (7) je zwei axial benachbarte Blechlamellen (10) betragsmässig um den halben Phasenwinkel ([phi]) versetzt sind.

6. Permanentmagnetmotor nach einem der Ansprüche 1 bis 5, **dadurch gekennzeichnet, dass** die Blechlamellen (10) zwar ganzzählig, aber nicht doppelt ganzzählig rotationssymmetrisch sind.

7. Permanentmagnetmotor nach einem der Ansprüche 1 bis 6, **dadurch gekennzeichnet, dass** die Blechlamellen (10) zwar zweizählig, aber nicht vierzählig rotationssymmetrisch sind.

8. Permanentmagnetmotor nach einem der Ansprüche 1 bis 7, **dadurch gekennzeichnet, dass** im Blechpaket (7) je zwei axial benachbarte Blechlamellen (10) um den halben Phasenwinkel ([phi]) gleichsinnig umlaufend versetzt sind.

9. Permanentmagnetmotor nach einem der Ansprüche 1 bis 8, **dadurch gekennzeichnet, dass** die Blechlamelle (10) je genau zwei offene und zwei geschlossene Ausnehmungen (8a, 8b) aufweist.

10. Permanentmagnetmotor nach einem der Ansprüche 1 bis 9, **dadurch gekennzeichnet, dass** die Blechlamelle (10) vollumfänglich um den halben Phasenwinkel ([phi]) drehversetzt angeordnete Stanzpakettierpunkte (14) aufweist, die bezüglich einer Lamellenseite axial auskragen und bezüglich der anderen Lamellenseite stapelbar passend axial eingedrückt sind.
